Europäisches Patentamt

European Patent Office

Office européen des brevets

(19)

(11) Veröffentlichungsnummer: **0 183 859**
**B1**

(12) # EUROPÄISCHE PATENTSCHRIFT

(45) Veröffentlichungstag der Patentschrift: **11.07.90**

(21) Anmeldenummer: **84114521.2**

(22) Anmeldetag: **30.11.84**

(51) Int. Cl.⁵: **G 01 F 1/58**

(54) **Induktiver Durchflussmesser.**

(43) Veröffentlichungstag der Anmeldung:
**11.06.86 Patentblatt 86/24**

(45) Bekanntmachung des Hinweises auf die
Patenterteilung: **11.07.90 Patentblatt 90/28**

(84) Benannte Vertragsstaaten:
**CH DE FR GB IT LI NL**

(56) Entgegenhaltungen:
**EP-A-0 069 459**
**US-A-3 631 718**
**US-A-4 470 309**

(73) Patentinhaber: **FLOWTEC AG**
**Kägenstrasse 4**
**CH-4153 Reinach BL 1 (CH)**

(72) Erfinder: **Boss, Jürg**
**Baslerstrasse 28**
**CH-4106 Therwil (CH)**
Erfinder: **Blatter, Max**
**Schulackerstrasse 32**
**CH-4142 Münchenstein (CH)**

(74) Vertreter: **Leiser, Gottfried, Dipl.-Ing. et al**
**Patentanwälte Prinz, Leiser, Bunke & Partner**
**Manzingerweg 7**
**D-8000 München 60 (DE)**

Courier Press, Leamington Spa, England.

## Beschreibung

Die Erfindung betrifft einen induktiven Durchflußmesser mit einem Meßrohr mit freiem Durchflußquerschnitt, wenigstens einer auf einem Spulenkern angeordneten Magnetfeldspule, auf entgegengesetzten Seiten des Meßrohres angeordneten Polschuhen, die mit dem bzw. jedem Spulenkern magnetisch gekoppelt sind und zwischen denen ein quer zur Achse des Meßrohres gerichtetes Magnetfeld erzeugt wird, Elektroden zur Abnahme der elektrischen Spannung, die in einer durch das Meßrohr fließenden elektrisch leitenden Flüssigkeit induziert wird, und mit einer an der Meßstelle angeordneten elektronischen Schaltung, die eine den Magnetfeldspulenstrom steuernde Spulensteuerschaltung und einen die Elektrodenspannung verstärkenden Verstärker enthält und mit einem an einer entfernten Auswertestelle angeordneten Auswertegerät durch eine Zweidrahtleitung verbunden ist, über die einerseits die zum Betrieb des induktiven Durchflußmessers erforderliche Energie von der Auswertestelle zur Meßstelle und andererseits ein von der elektronischen Schaltung erzeugtes Meßwertsignal von der Meßstelle zur Auswertestelle übertragen werden.

Bei Durchflußmessern dieser Art bestehen Einschränkungen hinsichtlich der zulässigen Leistungsaufnahme, da die gesamte Leistung über die Zweidrahtleitung übertragen werden muß, die auch das Meßwertsignal überträgt. Die Leistungsaufnahme des Durchflußmessers ist in erster Linie durch die für die Erzeugung des Magnetfelds erforderliche Leistung bestimmt, zu der noch die Leistung hinzukommt, die von der an der Meßstelle angeordneten elektronischen Schaltung aufgenommen wird. Die für die Erzeugung des Magnetfelds erforderliche Leistung ist um so größer, je größer die Nennweite des Durchflußmessers ist. Die für die Energieversorgung des Durchflußmessers über die Zweidrahtleitung übertragene Leistung entspricht dem Produkt aus dem über die Zweidrahtleitung fließenden Strom und der an der Zweidrahtleitung anliegenden Spannung. Gemäß einer weit verbreiteten Norm wird das Meßwertsignal dadurch übertragen, daß sich der über die Zweidrahtleitung fließende Gleichstrom zwischen 4 und 40 mA ändert. Die maximal zulässige Spannung auf der Zweidrahtleitung ist sowohl aus technischen Gründen als auch durch die Einsatzbedingungen und Sicherheitsvorschriften begrenzt. Besonders strenge Beschränkungen bestehen, wenn der induktive Durchflußmesser in einer explosionsgefährdeten Zone angeordnet ist, so daß sowohl der Durchflußmesser selbst als auch die zur Auswertestelle führende Zweidrahtleitung den Vorschriften entsprechend eigensicher (Ex(i)) ausgeführt sein müssen.

Eine diese Bedingung erfüllende eigensichere Zweidrahtleitung stellt insgesamt nur eine Leistung von ca. 400 mW zur Verfügung. Die induktiven Durchflußmesser nach dem Stand der Technik benötigen demgegenüber für die Erregung der Magnetfeldspulen durchwegs Erregerleistungen von 0,5 bis 1 W oder mehr, damit bei einer Magnetfeldfrequenz von 12,5 bis 25 Hz an den Elektroden ein ausreichend störsicher erfaßbares Nutzsignal von ca. 250 μV/m/s erhalten wird. Da die über die Zweidrahtleitung übertragene Leistung außer der Erregerleistung für die Magnetfeldspulen auch noch den Leistungsbedarf der elektronischen Schaltungen decken muß, war es nicht möglich, die induktiven Durchflußmesser nach dem Stand der Technik entsprechend den Vorschriften für die Eigensicherheit in explosionsgefährdeten Bereichen einzusetzen, denn die von ihnen benötigte Gesamtleistung überschritt bei weitem die über eine eigensichere Zweidrahtverbindung übertragbare Höchstleistung von ca. 400 mW. Selbst wenn bei Durchflußmessern kleiner Nennweite die Leistungsaufnahme so gering gehalten werden konnte, daß die strengen Sicherheitsvorschriften noch erfüllt wurden, stieg bei Durchflußmessern größerer Nennweite die Leistungsaufnahme mit zunehmender Nennweite so stark an, daß deren Einsatz in explosionsgefährdeten Zonen nicht mehr zulässig war.

In der US—A—4 470 309 sind zahlreiche Ausführungsbeispiele von indutktiven Durchflußmessern beschrieben, die alle den Zweck haben, eine bestimmte ungleichmäßige Verteilung des Magnetflusses im Meßrohrquerschnitt zu erzielen. Bei einigen dieser Ausführungsbeispiele sind die auf entgegengesetzten Seiten des Meßrohres angeordneten Spulenkerne mit Polschuhen versehen, deren Polschuhflächen um ein Vielfaches größer als die Querschnittsflächen der Spulenkerne sind und die zur Erzielung der gewünschten Magnetflußverteilung mit nach innen einspringenden Abschnitten des zur Rückführung des Magnetflusses dienenden Gehäuses zusammenwirken. Diese Druckschrift befaßt sich nicht mit den Problemen, die durch die Energievorsorgung und Meßwertsignalübertragung über eine einzige Zweidrahtleitung insbesondere dann entstehen, wenn sich der Durchflußmesser in einer explosionsgefährdeten Zone befindet.

Bei der Konstruktion von induktiven Durchflußmessern der eingangs angegebenen Art sind die Polschuhflächen durch die gewünschte Feldverteilung im Meßrohr vorgegeben. Zur Herstellung gleichartiger Durchflußmesser unterschiedlicher Nennweiten werden üblicherweise alle Abmessungen im wesentlichen maßstabsgerecht, also proportional zu der Nennweite verändert. Dies hat zur Folge, daß bei zunehmender Nennweite sowohl die Polschuhflächen als auch die Querschnittsflächen der Spulenkerne mit dem Quadrat der Nennweite größer werden, als das Verhältnis zwischen den Polschuhflächen und den Querschnittsflächen der Spulenkerne konstant bleibt. Die mittlere Windungslänge der auf den Spulenkernen angeordneten Magnetfeldspulen ist dann der Nennweite proportional, und dementsprechend steigt der ohmsche Widerstand der Magnetfeldspulen mit zunehmender Nennweite stark an. Dies ist ein wesentlicher Grund dafür, daß bei Durchflußmessern größerer Nennweite die Leistungsaufnahme den für einen eigensicheren Betrieb zulässigen Höchstwert von ca. 400 mW übersteigt.

2

Aufgabe der Erfindung ist die Schaffung von Durchflußmessern der eingangs angegebenen Art, die in einem großen Nennweitenbereich eine sehr geringe Leistungsaufnahme haben, so daß sie auch bei Verwendung in explosionsgefährdeten Zonen die Sicherheitsvorschriften erfüllen.

Nach der Erfindung wird diese Aufgabe dadurch gelöst, daß das Verhältnis K zwischen der projizierten ebenen Polfläche F', die durch radiale Projektion jeweiligen Polschuhfläche F auf die Innenseite des Meßrohres entsteht, und der Querschnittsfläche E des jeweiligen Spulenkerns mindestens gleich 6 ist und dieses Verhältnis K der projizierten ebenen Polfläche F' zur Querschnittsfläche E des Spulenkerns, soweit es den Mindestwert 6 übersteigt, dem Produkt aus der in Millimetern gemessenen, dem Innendurchmesser entsprechenden Nennweite DN des Meßrohres mit einem Faktor m, der kleiner als 0,6 ist, gleich ist.

Bei den nach der Erfindung ausgebildeten induktiven Durchflußmessern unterschiedlicher Nennweiten ist das Verhältnis der projizierten Polschuhflächen zu den Querschnittsflächen der Spulenkerne, wenn es den Mindestwert 6 übersteigt, nicht konstant, sondern der Nennweite proportional. Wenn also beispielsweise bei zwei induktiven Durchflußmessern unterschiedlicher Nennweiten die projizierten Polschuhflächen des größeren Durchflußmessers gegenüber den projizierten Polschuhflächen des kleineren Durchflußmessers in herkömmlicher Weise maßstabsgerecht vergrößert sind, sind die Querschnittsflächen der Spulenkerne beim größeren Durchflußmesser zwar ebenfalls größer als beim kleineren Durchflußmesser, aber in einen wesentlich kleineren Verhältnis als bei einem in herkömmlicher Weise ausgebildeten Durchflußmesser. Infolge der im Verhältnis kleineren Querschnittsfläche der Spulenkerne ist auch die mittlere Windungslänge der Magnetfeldspulen kleiner, die dementsprechend mit kleinem Wicklungswiderstand bei großen Windungszahlen ausgebildet werden können, so daß auch die Leistungsaufnahme gering ist. Auf diese Weise können induktive Durchflußmesser in einem großen Bereich von Nennweiten gebaut werden, deren Leistungsaufnahme weit unter dem für einen eigensicheren Betrieb in explosionsgefährdeten Zonen zulässigen Höchstwert liegt.

Eine Ausgestaltung der Erfindung ist im Anspruch 2 angegeben.

Ausführungsbeispiele der Erfindung, die in der Zeichnung dargestellt sind, werden nachfolgend beschrieben. In der Zeichnung zeigt:

Fig. 1 das Blockschema eines an einer Meßstelle angeordneten induktiven Durchflußmessers, der mit einem an einer entfernten Auswertestelle angeordneten Auswertegerät durch eine Zweidrahtleitung verbunden ist,

Fig. 2 eine perspektivische Ansicht eines induktiven Durchflußmessers nach der Erfindung,

Fig. 3 eine Schnittansicht einer abgeänderten Ausführungsform des induktiven Durchflußmessers nach der Erfindung,

Fig. 4 eine Schnittansicht einer weiteren Ausführungsform des induktiven Durchflußmessers nach der Erfindung und

Fig. 5 ein Diagramm zur Erläuterung des angewendeten Konstruktionsprinzips.

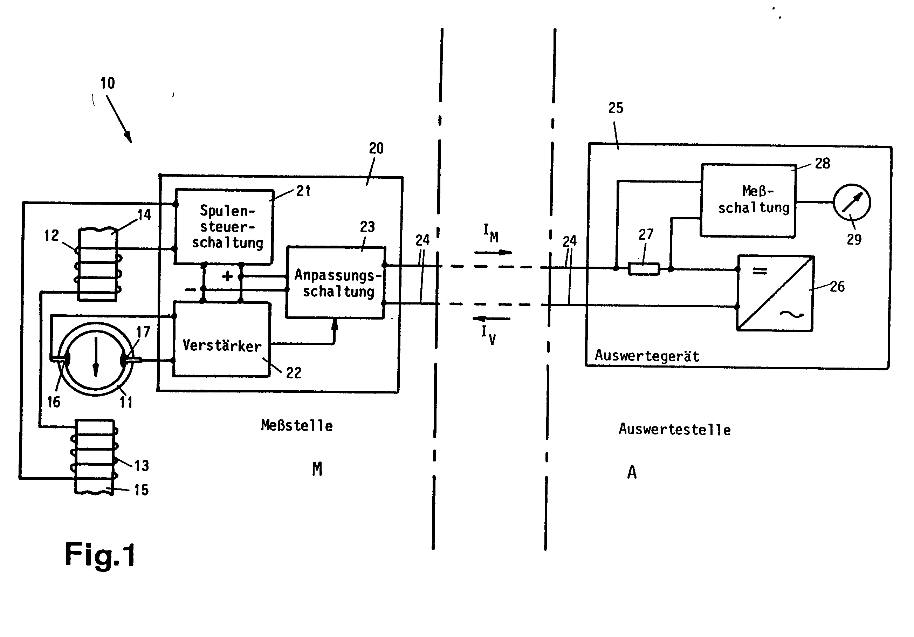

Fig. 1 zeigt einen an einer Meßstelle M angeordneten induktiven Durchflußmesser 10, der dazu bestimmt ist, den Durchfluß einer elektrisch leitenden Flüssigkeit durch eine Rohrleitung zu messen. Der induktive Durchflußmesser 10 hat ein innen isoliertes Meßrohr 11 und zwei zu beiden Seiten des Meßrohres 11 angeordnete Magnetfeldspulen 12 und 13, von denen jede auf einen Spulenkern 14 bzw. 15 gewickelt ist. Die Magnetfeldspulen 12 und 13 sind elektrisch in Serie geschaltet und erzeugen im Meßrohr 11 ein Magnetfeld, das senkrecht zur Rohrachse gerichtet ist. Im Innern des Meßrohres 11 sind zwei Elektroden 16 und 17 einander diametral gegenüber angebracht. Die Anschlüsse der Elektroden 16 und 17 sind druckdicht durch die Wand des Meßrohres hindurch nach außen geführt. Nach der bekannten Funktionsweise von induktiven Durchflußmessern kann an den Elektroden 16 und 17 eine induzierte elektrische Spannung abgegriffen werden, die der mittleren Durchflußgeschwindigkeit der durch das Magnetfeld H fließenden elektrisch leitenden Flüssigkeit proportional ist. Die Elektroden 16 und 17 können, wie bekannt, mit der Flüssigkeit entweder galvanisch leitend in Berührung stehen, oder sie können von der Flüssigkeit elektrisch isoliert sein, so daß die Signalabnahme durch kapazitive Kopplung erfolgt.

Zu dem induktiven Durchflußmesser 10 gehört ferner eine am Meßort angeordnete elektronische Schaltung 20, die eine Spulensteuerschaltung 21 und einen Verstärker 22 enthält. Die Spulensteuerschaltung 21 steuert den über die Magnetfeldspulen 12 und 13 fließenden elektrischen Strom entsprechend dem gewünschten zeitlichen Verlauf des Magnetfelds H, das beispielsweise ein mit einer Frequenz von 12,5 bis 25 Hz periodisch umgepoltes Gleichfeld ist. Der Verstärker 22 verstärkt die an den Elektroden 16 und 17 abgenommene induzierte Spannung.

Die elektronische Schaltung 20 enthält ferner eine Anpassungsschaltung 23, die es ermöglicht, den an der Meßstelle M angeordneten induktiven Durchflußmesser 10 über eine einzige Zweidrahtleitung 24 mit einem an einer entfernten Auswertestelle A angeordneten Auswertegerät 25 zu verbinden. Die Zweidrahtleitung 24 überträgt einerseits die zum Betrieb des induktiven Durchflußmessers 10 erforderliche elektrische Energie von der Auswertestelle A zur Meßstelle M und andererseits ein vom induktiven Durchflußmeßgerät 10 erzeugtes Meßwertsignal von der Meßstelle M zur Auswertestelle A. Das Auswertegerät 25 enthält ein Netzteil 26, das aus der Netzwechselspannung eine Gleichspannung von beispielsweise 24 V erzeugt, die an die Zweidrahtleitung 24 angelegt wird und einen Versorgungsgleichstrom $I_v$ zur elektronischen Schaltung 20 fließen läßt. Die Anpassungsschaltung 23 verteilt die zugeführte Gleichstromenergie in der erforderlichen Weise auf die Spulensteuerschaltung 21 und den Verstärker 22.

3

Ferner setzt die Anpassungsschaltung 23 die vom Verstärker 22 verstärkte Elektrodenspannung, die dem Durchfluß proportional ist, in einen Meßwert-Gleichstrom $I_M$ um, der über die Zweidrahtleitung 24 zum Auswertegerät 25 übertragen wird und sich somit auf der Zweidrahtleitung 24 dem Versorgungsgleichstrom $I_V$ überlagert. Der üblichen Norm entsprechend kann sich der Meßwert-Gleichstrom $I_M$ in dem gesamten Meßbereich zwischen 4 und 20 mA ändern. Das Auswertegerät 25 ist so ausgebildet, daß es aus dem über die Zweidrahtleitung 24 fließenden Gesamtstrom den Durchflußmeßwert gewinnt. Zu diesem Zweck kann in die Zweidrahtleitung 24 ein Widerstand 27 eingefügt sein, an dem ein dem Gesamtstrom proportionaler Spannungsabfall entsteht. Eine im Auswertegerät 25 enthaltene Meßschaltung 28 ist mit den Klemmen des Widerstands 27 verbunden und bildet aus dem Spannungsabfall am Widerstand 27 ein dem Durchfluß proportionales Signal, das beispielsweise die Anzeige des Durchflusses auf einem Anzeigegerät 29 ermöglicht. Die Übertragung des Meßwerts kann natürlich auch auf eine andere Weise erfolgen, beispielsweise durch eine Impulsmodulation, die dem Versorgungsgleichstrom auf der Zweidrahtleitung 24 überlagert wird.

Wenn sich die Meßstelle M in einer explosionsgefährdeten Zone befindet, während sich die Auswertestelle A in einer nicht gefährdeten Zone befindet, muß der induktive Durchflußmesser 10 eigensicher (Ex (i)) aufgebaut sein, d.h. so, daß keine elektrischen Zustände auftreten können, die eine Explosion auslösen könnten. Desgleichen muß die Energieübertragung von der an der Auswertestelle A befindlichen Stromversorgungsschaltung zu dem induktiven Durchflußmesser 10 über die Zweidrahtleitung 24 so erfolgen, daß die Vorschriften der Eigensicherheit erfüllt sind. Zu diesem Zweck sind entweder im Netzgerät 26 oder an einer geeigneten Stelle der Zweidrahtleitung 24 Strom- und Spannungsbegrenzer vorgesehen, die einerseits den über die Zweidrahtleitung fließenden Strom und andererseits die auf der Zweidrahtleitung auftretende Spannung auf zulässige Höchstwerte begrenzen. Die maximale Leistung, die über die Zweidrahtleitung 24 übertragen werden kann, ist daher auf das Produkt der Höchstwerte des Stroms und der Spannung beschränkt. Eine eigensichere Zweidrahtverbindung stellt, wie bereits erwähnt, insgesamt nur eine Leistung von ca. 400 mW zur Verfügung.

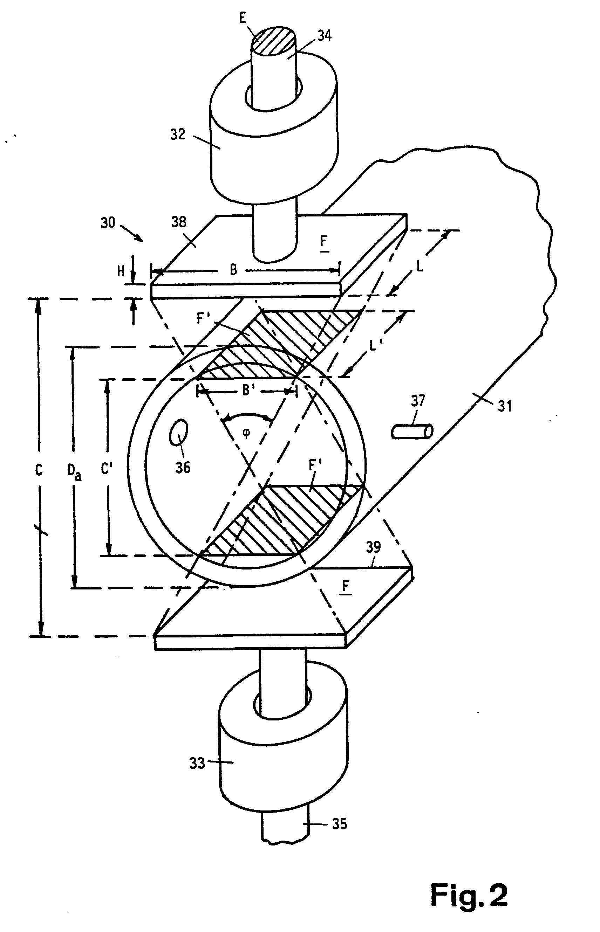

In Fig. 2 ist in sehr vereinfachter schematischer Darstellung ein induktiver Durchflußmesser dargestellt, bei dem die Leistungsaufnahme drastisch reduziert ist, so daß selbst bei großen Durchmessern des Meßrohres der für einen eigensicheren Betrieb zulässige Höchstwert der über die Zweidrahtleitung zu übertragenden Gesamtleistung nicht erreicht wird.

Der induktive Durchflußmesser 30 von Fig. 2 hat ein Meßrohr 31, zwei zu beiden Seiten des Meßrohres 31 angeordnete Magnetfeldspulen 32 und 33, von denen jede auf einem Spulenkern 34 bzw. 35 sitzt, und zwei im Innern des Meßrohres angeordnete und durch die Rohrwand nach außen geführte Elektroden 36 und 37. Jeder Spulenkern 34, 35 hat eine verhältnismäßig kleine Querschnittsfläche E und ist mit einem Polschuh 38 bzw. 39 verbunden, dessen Flächenausdehnung F groß gegen die Querschnittsfläche E des Spulenkerns ist. Jeder Polschuh 38 und 39 hat die Form einer Platte gleichförmiger Dicke mit der Breite B und der Länge L. Die Höhe H jedes Polschuhs ist gleich der Plattendicke und somit ebenfalls gleichförmig. Die Polschuhe 38 und 39 bestehen natürlich, ebenso wie die Spulenkerne 34 und 35, aus einem der für Magnetkreise üblicherweise verwendeten, vorzugsweise magnetisch weichen ferromagnetischen Materialien.

Da die mittlere Windungslänge jeder Magnetfeldspule 32, 33 durch den kleinen Querschnitt des Spulenkerns 34 bzw. 35 bestimmt ist, können die Magnetfeldspulen mit kleinem Wicklungswiderstand bei großen Windungszahlen ausgebildet werden. Dagegen sind für das Magnetfeld im Meßrohr 31 die Flächen der Polschuhe 38 und 39 maßgeblich, die ohne Rücksicht auf den Spulenwiderstand optimal ausgebildet werden können. Die Verringerung der Spulenkernfläche E gegenüber der Polschuhfläche F ist ohne weiteres möglich, da die Spulenkerne bei den angewendeten Feldstärken weitab von der Sättigung betrieben werden.

Für die optimale Auslegung der Form und Abmessungen der Polschuhe 36, 37 wird von den "projizierten Polflächen" F' ausgegangen, die durch radiale Projektion der Polschuhflächen F auf die Innenseite des Rohres 31 erhalten werden und zur Verdeutlichung in Fig. 2 schraffiert sind. Jede projizierte Polfläche F' ist die durch die radiale Projektion entstehende ebene Sehnenfläche, deren Längsseiten an der Innenfläche des Meßrohres 31 anliegen. Das Nutzsignal/Leistungs-Verhältnis ist um so größer, je größer das zwischen den projizierten Polflächen F' eingeschlossene Volumen V' ist, das gleich dem Produkt aus der projizierten Polfläche F' und dem Abstand C' zwischen den projizierten Poflächen ist:

$$V' = F' \cdot C'.$$

Jede projizierte Polfläche F' ist ihrerseits gleich dem Produkt aus ihrer Breite B' und ihrer Länge L':

$$F' = B' \cdot L'.$$

Die Länge L' jeder projizierten Polfläche F' ist gleich der Länge L des Polschuhs. Dagegen ist die Breite B' der projizierten Polfläche F' durch den Projektionswinkel φ bestimmt, der mit der Polschuhbreite B und dem Polschuhabstand C zusammenhängt. Je größer der Projektionswinkel φ ist, desto größer ist die Breite B' der projizierten Polfläche F', desto kleiner ist aber auch der Abstand C' zwischen den projizierten Polflächen F'. Der optimale Projektionswinkel φ, bei dem sich das maximale Volumen V' ergibt, beträgt etwa 90°.

4

Ferner läßt Fig. 2 erkennen, daß bei gegebenem Projektionswinkel φ die Polschuhbreite B und somit auch die Polschuhfläche F um so kleiner ist, je näher der Polschuh am Meßrohr 31 liegt, je kleiner also der gegenseitige Abstand C der beiden Polschuhe ist. Der kleinstmögliche Polschuhabstand C ist offensichtlich gleich dem Außendurchmesser $D_a$ des Meßrohres 31. Ebene Polschuhe, wie sie in Fig. 2 dargestellt sind, tangieren dann die Außenfläche des Rohres, und sie haben die kleinstmögliche Fläche F, die eine vorgegebene projizierte Polfläche F' ergibt.

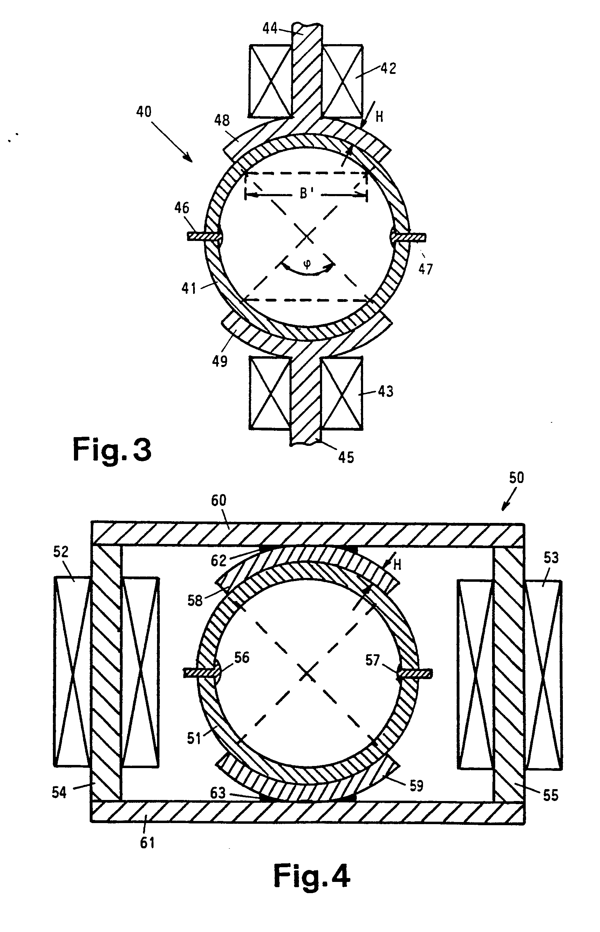

Fig. 3 zeigt eine andere Ausführungsform eines induktiven Durchflußmessers 40 mit einem Meßrohr 41, zwei entlang einer diametralen Achse zu beiden Seiten des Meßrohres 41 angeordneten Magnetfeldspulen 42 und 42 mit ihren Spulenkernen 44 bzw. 45 und mit zwei Elektroden 46 und 47 in einer durch die Achsen der Magnetfeldspulen und der Elektroden gelegten diametralen Schnittansicht. Wie bei der Ausführungsform von Fig. 2 hat jeder Spulenkern 44 und 45 eine verhältnismäßig kleine Querschnittsfläche, er ist aber mit einem plattenförmigen Polschuh 48 bzw. 49 verbunden, dessen Flächenausdehnung groß gegen die Querschnittsfläche des Spulenkerns ist. Die Ausführungsform von Fig. 3 unterscheidet sich von den Ausführungsform von Fig. 2 dadurch, daß die plattenförmigen Polschuhe 48, 49 nicht eben, sondern gekrümmt sind und an der Außenfläche des Meßrohres 41 anliegen. Jeder Polschuh 48, 49 bildet einen Abschnitt eines rohrförmigen Zylinders, dessen Innendurchmesser gleich dem Außendurchmesser des Meßrohres 41 ist. Es ist unmittelbar zu erkennen, daß die Bogenlänge der gekrümmten Breitseite jeder Polschuhfläche kleiner ist als die Breite einer tangential anliegenden ebenen Polschuhfläche, die die gleiche Breite B' der projizierten Polfläche ergibt. Somit ist bei der Ausführungsform von Fig. 3 die Polschuhfläche F, die eine durch einen vorgegebenen Projektionswinkel φ bestimmte projizierte Polfläche F' ergibt, am kleinsten.

Die Ausführungsformen von Fig. 2 und 3 lassen erkennen, daß nicht nur die Bemessung der Querschnittsfläche der Spulenkerne, sondern auch deren Form unabhängig von der Größe und der Form der Polschuhe ist. Während die Polschuhe vorzugsweise einen unrunden Grundriß haben, können die Spulenkerne kreiszylindrisch ausgebildet sein. Dies ergibt die kürzestmögliche Windungslänge und erleichtert auch das Wickeln der Magnetfeldspulen.

In Fig. 4 ist eine weitere Ausführungsform eines induktiven Durchflußmessers dargestellt, bei welcher die Tatsache ausgenutzt wird, daß die Ausbildung mit Polschuhen eine Freizügigkeit nicht nur hinsichtlich der Größe und Form, sondern auch hinsichtlich der Lage der Magnetfeldspulen und der Spulenkerne ergibt. Der in Fig. 4 dargestellte induktive Durchflußmesser 50 hat ein Meßrohr 51, zwei Magnetfeldspulen 52 und 53, Spulenkerne 54 und 55, Elektroden 56 und 57 und Polschuhe 58 und 59. Die Polschuhe 58 und 59 hagen, wie bei der Ausführungsform von Fig. 3, die Form von teilzylindrisch gekrümmten Platten, die an der Außenseite des Meßrohres 51 anliegen. Die Magnetfeldspulen 52 und 53 mit ihren Spulenkernen 54, 55 sind jedoch nicht gleichachsig zueinander entlang einer gemeinsamen Durchmesserachse angeordnet, sondern sie liegen zu beiden Seiten des Meßrohres 51 mit parallelen Achsen, und die Spulenkerne 54, 55 sind mit den Polschuhen 58, 59 durch quer verlaufende Joche 60 und 61 verbunden. Die Joche 60, 61 schließen ohne Luftspalte an die Stirnflächen der Spulenkerne 54 und 55 an und sind durch großflächige Verschweißungen 62 bzw. 63 mit den Polschuhen 58 und 59 verbunden, damit der magnetische Widerstand des geschlossenen Magnetkreises möglichst klein gehalten wird. Die Ausführungsform von Fig. 4 ergibt insbesondere den Vorteil einer niedrigen Bauhöhe.

Bei den anhand der Figuren 2, 3 und 4 beschriebenen Ausführungsformen von induktiven Durchflußmessern ist die Spulenkernfläche E wesentlich kleiner als die Polschuhfläche F und auch wesentlich kleiner als die projizierte Polfläche F'. Wie zuvor erläutert wurde, ergibt dies eine kleinere Windungslänge der Magnetfeldspulen und somit auch eine Verringerung der von den Magnetfeldspulen aufgenommenen Verlustleistung. Die Verringerung der Verlustleistung ist um so stärker, je größer das Verhältnis

$$K = \frac{F'}{E} = \frac{\text{projizierte Polfläche}}{\text{Spulenkernfläche}}$$

ist. Durch geeignete Bemessung des Verhältnisses K ist es möglich, auch bei induktiven Durchflußmessern mit großen Nennweiten DN die Verlustleistung wesentlich zu verringern und insbesondere so klein zu machen, daß ein eigensicherer Aufbau des Durchflußmessers möglich ist. Die "Nennweite DN" ist der Innendurchmesser des Meßrohres in Millimetern. Die induktiven Durchflußmesser werden mit abgestuften Nennweiten DN hergestellt. Die Auswahl der Nennweite DN für einen bestimmten Anwendungsfall erfolgt in Abhängigkeit von dem zu erfassenden Durchfluß-Meßbereich.

Es wird nicht bei allen Nennweiten DN das gleiche Verhältnis K angewendet, sondern das Verhältnis K wird in Abhängigkeit von der Nennweite DN so bemessen, daß es um so größer ist, je größer die Nennweite DN ist. Wie zuvor erläutert wurde, wird die Leistungsaufnahme um so stärker verringert, je größer das Verhältnis K ist. Es ist daher insbesondere bei großen Nennweiten DN vorteilhaft, das Verhältnis K möglichst groß zu wählen. Ein großes Verhältnis K kann bei Durchflußmessern mit großer Nennweite DN auch problemlos angewendet werden, weil bei diesen die Polschuhflächen und demzufolge auch die projizierten Polflächen groß sind, so daß selbst bei großem Verhältnis K immer noch ein ausreichender Spulenkernquerschnitt vorhanden ist. Die Anwendung des gleichen großen Verhältnisses K bei kleinen Nennweiten DN würde dagegen sehr kleine Spulenkernquerschnitte ergeben, was zu mechanischen Problemen führen würde. Andrerseits ist bei kleineren Nennweiten DN eine weniger starke Verringerung der Leistungsaufnahme ausreichend. Es wird daher die folgende Bemessungsregel angewendet:

—Das Verhältnis K ist für die größeren Nennweiten etwa der Nennweite DN mit einem Faktor m proportional:

$$K = m \cdot DN;$$

—bei den kleinsten Nennweiten DN wird ein Kleinstwert

$$K_{min} \approx 6$$

nicht unterschritten.

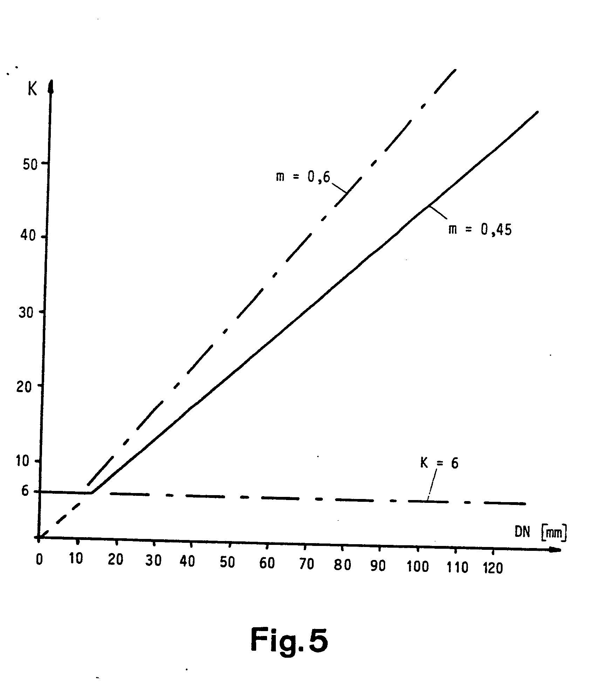

Mit dem Faktor m=0,45 ergibt sich nach dieser Bemessungsregel beispielsweise der in Fig. 5 durch eine volle Linie dargestellte Zusammenhang zwischen der Nennweite DN und dem Verhältnis K. Der konstante Kleinstwert $K_{min}$=6 wird bei Nennweiten unter etwa DN=13 mm angewendet; von diesem Kleinstwert an steigt das Verhältnis K etwa linear mit der Nennweite DN an, so daß es bei der Nennweite DN=100 mm bereits den Wert 45 hat. Somit besteht bei der Nennweite DN=100 mm das Verhältnis 1:45 zwischen der Spulenkernfläche und der projizierten Polfläche. Die bisherigen Erfahrungen haben gezeigt, daß mit einem Faktor m in der Größenordnung von 0,45 optimale Ergebnisse erzielt werden, doch kommt es natürlich nicht auf ein exaktes Einhalten eines bestimmten Zahlenwerts und des linearen Zusammenhangs an. Grundsätzlich gilt, daß eine Vergrößerung des Faktors m eine Verringerung des Leistungsbedarfs ergibt, zugleich aber auch eine Verringerung der Magnetfeldfrequenz, mit der der induktive Durchflußmesser betrieben werden kann. Dies bedeutet, daß der induktive Durchflußmesser langsamer arbeitet. Es erscheint daher wenig sinnvoll, einen Wert von etwa m=0,6 zu überschreiten, dem in Fig. 5 die strichpunktierte Linie entspricht. Umgekehrt erlaubt eine Verkleinerung des Faktors m die Anwendung einer höheren Magnetfeldfrequenz und dementsprechend einen schnelleren Betrieb, jedoch verbunden mit einem größeren Leistungsbedarf. Unter Berücksichtigung dieser Zusammenhänge wird der Fachmann, je nach den vorherrschenden Bedingungen, das Flächenverhältnis K in dem Bereich wählen, der in Fig. 5 durch die beiden strichpunktierten Linien begrenzt ist, die einerseits dem Kleinstwert K=6 und andererseits dem Parameter m=0,6 entsprechen. Im Regelfall werden die optimalen Flächenverhältnisse K in der Umgebung der dem Parameter m=0,45 entsprechenden Kurve liegen.

Eine weitere Bemessungsregel betrifft die Höhe H der Polschuhe. Bei den zuvor anhand der Figuren 2, 3 und 4 beschriebenen Ausführungsbeispielen werden plattenförmige Polschuhe angewendet, die aus Platten gleichförmiger Dicke gebildet sind. Die Polschuhhöhe H ist daher ebenfalls gleichförmig und durch die Plattendicke gegeben. In Abhängigkeit von der Nennweite DN (in Millimetern) sollte die Polschuhhöhe H einen Größtwert nicht überschreiten, der durch die folgende Bemessungsregel gegeben ist:

$$H \leq 0,5 \cdot \sqrt{DN}.$$

Mit der angegebenen Bemessung ist es möglich, induktive Durchflußmesser in einem großen Bereich von Nennweiten zu bauen, die bei nur etwa 50 mW Leistungsaufnahme ein Meßsignal von ca. 250 µV/m/s abgeben.

## Patentansprüche

1. Induktiver Durchflußmesser mit einem Meßrohr (11; 31; 41; 51) mit freiem Durchflußquerschnitt, wenigstens einer auf einem Spulenkern (14, 15; 34, 35; 44, 45; 54, 55) angeordneten Magnetfeldspule (12, 13; 32, 33; 42, 43; 52, 53), auf entgegengesetzten Seiten des Meßrohres (11; 31; 41; 51) angeordneten Polschuhen (38, 39; 48, 49; 58, 59), die mit dem bzw. jedem Spulenkern (34, 35; 44, 45; 54, 55) magnetisch gekoppelt sind und zwischen denen ein quer zur Achse des Meßrohres gerichtetes Magnetfeld erzeugt wird, Elektroden (16, 17; 36, 37; 46, 47; 56, 57) zur Abnahme der elektrischen Spannung, die in einer durch das Meßrohr fließenden elektrisch leitenden Flüssigkeit induziert wird, und mit einer an der Meßstelle (M) angeordneten elektronischen Schaltung (20), die eine den Magnetfeldspulenstrom steuernde Spulensteuerschaltung (21) und einen die Elektrodenspannung verstärkenden Verstärker (22) enthält und mit einem an einer entfernten Auswertestelle (A) angeordneten Auswertegerät (25) durch eine Zweidrahtleitung (24) verbunden ist, über die einerseits die zum Betrieb des induktiven Durchflußmessers erforderliche Energie von der Auswertestelle (A) zur Meßstelle (M) und andererseits ein von der elektronischen Schaltung (20) erzeugtes Meßwertsignal von der Meßstelle (M) zur Auswertestelle (A) übertragen werden, wobei das Verhältnis K zwischen der projizierten ebenen Polfläche F', die durch radiale Projektion der jeweiligen Polschuhfläche F auf die Innenseite des Meßrohres (31; 41; 51) entsteht, und der Querschnittsfläche E des jeweiligen Spulenkerns (34, 35; 44, 45; 54, 55) mindestens gleich 6 ist und dieses Verhältnis K der projizierten ebenen Polfläche F' zur Querschnittsfläche E des Spulenkerns (34, 35; 44, 45; 54, 55), soweit es den Mindestwert 6 übersteigt, dem Produkt aus der in Millimetern gemessenen, dem Innendurchmesser entsprechenden Nennweite DN des Meßrohres (31; 41; 51) mit einem Faktor m, der kleiner als 0,6 ist, gleich ist.

2. Induktiver Durchflußmesser nach Anspruch 1, bei welchem jeder Polschuh (38, 39; 48, 49; 58, 59)

6

durch eine Platte gleichförmiger Dicke gebildet ist, wobei die durch die Plattendicke bestimmte Höhe H jedes Polschuhs (38, 39; 48, 49; 58, 59) einen in Abhängigkeit von der in Millimetern gemessenen Nennweite DN des Meßrohres (31; 41; 51) durch die Bemessungsregel

$$H \leqq 0,5\sqrt{DN}$$

gegebenen Größtwert nicht überschreitet.

**Revendications**

1. Débitmètre à induction, comprenant un tube de mesure (11; 31; 41; 51) à section d'écoulement libre, au moins une bobine de champ magnétique (12, 13; 32, 33; 42, 43; 52, 53) disposée sur un noyau de bobine (14, 15; 34, 35; 44, 45; 54, 55), des pièces polaires (38, 39; 48, 49; 58, 59) disposées sur des côtés opposés du tube de mesure (11; 31; 41; 51) qui sont couplées magnétiquement au noyau de bobine ou à chaque noyau de bobine (34, 35; 44, 45; 54, 55) et entre lesquelles est créé un champ magnétique orienté transversalement à l'axe du tube de mesure, des électrodes (16, 17; 36, 37; 46, 47; 56, 57) pour prélever la tension électrique qui est induite dans un fluide électriquement conducteur qui circule dans le tube de mesure, et un circuit électronique (20) qui est disposé sur le lieu de mesure (M) et inclut d'une part un circuit de pilotage de bobine (21) pilotant le courant de la bobine de champ magnétique et d'autre part un amplificateur (22) amplifiant la tension des électrodes, le circuit (20) étant relié à un appareil d'exploitation (25) disposé en un lieu d'exploitation éloigné (A) par une ligne bifilaire qui transmet d'une part, du lieu d'exploitation (A) au lieu de mesure (M), l'énergie nécessaire au fonctionnement du débitmètre à induction et d'autre part, du lieu de mesure (M) au lieu d'exploitation (A), un signal de mesure produit par le circuit électronique (20), débitmètre dans lequel le rapport K entre la surface polaire plane projetée F', qui est obtenue en projetant radialement la surface F de la pièce polaire respective sur le côté intérieur du tube de mesure (31; 41; 51), et la surface E de la section droite du noyau de bobine (34, 35; 44, 45; 54, 55) respectif est au moins égal à 6, et ce rapport K de la surface polaire plane projetée F' à la surface E de la section droite du noyau de bobine (34, 35; 44, 45; 54, 55), dans la mesure où il dépasse la valeur minimale de 6, est approximativement égal au produit au calibre nominal—correspondant au diamètre intérieur—mesuré en millimètres DN du tube de mesure (31; 41; 51) par un facteur $m$ inférieur à 0,6.

2. Débitmètre à induction selon la revendication 1, dans lequel chaque pièce polaire (38, 39; 48, 49; 58, 59) est formée par une plaque dépaisseur uniforme, et dans lequel la hauteur H de chaque pièce polaire (38, 39; 48, 49; 58, 59), déterminée par l'épaisseur de la plaque, ne dépasse pas une valeur maximale donnée, en fonction du calibre nominal DN mesuré en millimètres du tube de mesure (31; 41; 51), par la règle de dimensionnement:

$$H \leqq 0,5\sqrt{DN}$$

**Claims**

1. An electromagnetic flow meter comprising a measuring tube (11; 31; 41; 51) having a free flow cross-section, at least one magnetic field coil (12, 13; 32, 33; 42, 43; 52, 53) arranged on a core (14, 15; 34, 35; 44, 45; 54, 55), pole shoes (38, 39; 48, 49; 58, 59) disposed on opposite sides of said measuring tube (11; 31, 41; 51) said pole shoes being magnetically coupled to the or each core (34, 35; 44, 45; 54, 55) and between which pole shoes a magnetic field is generated oriented transversely to the axis of said measuring tube, electrodes (16, 17; 36, 37; 46, 47; 56, 57) for tapping off the electrical voltage induced in an electrically conductive liquid flowing through said measuring tube, and an electronic circuit (20) disposed at the measuring place (M), said circuit including a coil control circuit (21) controlling the magnetic field coil current and an amplifier (22) intensifying the electrode voltage and being connected to an evaluation device (25) disposed at a remote evaluation place (A) via a two-wire line (24) through which, on the one hand, the energy required for the operation of the electromagnetic flow meter is transmitted from said evaluation place (A) to said measuring place (M) and, on the other hand, a measuring value signal generated by said electronic circuit (20) is transmitted from said measuring place (M) to said evaluation place (A), wherein the ratio K between the projected plane pole face area F', created by the radial projection of the respective pole shoe face F onto the inner side of said measuring tube (31; 41; 51), and the cross-sectional area E of the respective core (34, 35; 44, 45; 54, 55) is at least equal to 6 and this ratio K between said projected plane pole face area F' and said cross-sectional area E of the core (34, 35; 44, 45; 54, 55), to the extent that it exceeds the minimum value 6, is equal to the product of the nominal width DN of said measuring tube (31; 41, 51) corresponding to the interior diameter and measured in millimeters and of a factor m being smaller than 0.6.

2. Electromagnetic flow meter according to claim 1, wherein each pole shoe (38, 39; 48, 49; 58, 59) is formed by a plate of uniform thickness, the height H of each pole shoe (38, 39; 48, 49; 58, 59) determined by the thickness of said plate not exceeding a maximum value given by the dimensioning rule

$$H \leqq 0,5\sqrt{DN}$$

in dependence on said nominal width DN of said measuring tube (31; 41; 51) measured in millimeters.

7

**Fig.1**

Spulen-steuer-schaltung 21

Anpassungs-schaltung 23

Verstärker 22

Meßstelle

M

$I_M$

$I_V$

Meß-schaltung 28

Auswertegerät

Auswertestelle

A

EP 0 183 859 B1

**Fig.2**

Fig.3

Fig.4

3

Fig.5